# EUROPEAN PATENT APPLICATION

(11) **EP 2 180 442 A1**
(43) Date of publication of application: **28.04.2010**
(21) Application number: 08305729.9
(22) Date of filing: 24.10.2008
(51) Int. Cl.: G06Q 30/00

(54) **Assistance system and associated method in large retail stores**

(71) Applicant: Alcatel Lucent, 75008 Paris (FR)
(72) Inventor: Toms, Yann, 91620 Nozay (FR); Aghasaryan, Armen, 91620 Nozay (FR); Betge Brezetz, Stéphane, 91620 Nozay (FR); Andrieu, Xavier, 91620 Nozay (FR)
(74) Representative: Hedarchet, Stéphane

(57) **Abstract**

The invention relates to an assistance system for assisting a user in a retail store, comprising a user terminal adapted to send an assistance request related to a specific product to an assistance message management module, wherein the system comprises a collaborative assistance management module comprising
- detection means for detecting a community of assistance providers for the specific product,
- selection means for selecting at least an assistance provider among the community according to a criterion related to the user or to the product,

and the assistance message management module being adapted to connect the selected at least the assistance provider to the user.

## Description

The present invention is related to an assistance system and an associated method in large retail stores.

E-commerce has exploded in the past few years because it offers more to consumers than classical shopping.

Among the particularities of e-commerce appreciated by consumers are the comparators and the quantity of information available on products and more particularly information given by consumers themselves: product ranking/rating, customer and expert advices, etc.

This enables the consumer to make the right choice when buying a product.

But none of those online tools have appeared in retail shops, any assistance or advice relying on a potential salesman, who moreover is not always available and if he is, may give a judgment lacking impartiality. Most of the time, the consumer is left alone with no possible pieces of advices.

This situation is not satisfying neither for the consumer who may buy a product which doesn't correspond to his needs, buy the wrong product or buy no product at all, nor for the retailer who may lose a sale or a client.

In large retail stores, no adapted solution exists to immediately provide to the customer all the needed information or advice he needs on a product. A salesman, if there is one, available, may lack objectivity in his judgments depending on his sales objectives.

In certain specialized stores, some technical leaflets are at the disposal of the consumer but they only concern high-tech objects.

Another solution for the customer is to get the information on the internet before getting to the retail store to buy what he needs. But a product, if not a mass consumption object, won't necessarily have a reference on the internet. Moreover, gathering information on the internet, besides the waste of time, won't replace a face to face discussion about a need with someone of experience.

The object of the present invention, according to an embodiment, is an assistance system for assisting a user in a retail store, comprising a user terminal adapted to send an assistance request related to a specific product to an assistance message management module, wherein the system comprises a collaborative assistance management module comprising
- detection means for detecting a community of assistance providers for the specific product,
- selection means for selecting at least an assistance provider among the community according to a criterion related to the user or to the product,
- and the assistance message management module being adapted to connect the selected at least the assistance provider to the user.

The object of the present invention, according to an embodiment, is also an assistance method for assisting a user in a retail store, comprising :
- providing a user terminal adapted to send an assistance request related to a specific product to an assistance message management module,
- providing a collaborative assistance management module,
- detection step for detecting a community of assistance providers for the specific product,
- selection step for selecting at least an assistance provider among the community according to a criterion related to the user or to the product,
- and connection step for connecting the selected at least the assistance provider to the user.

The invention exploits the fact that many people, such as salesmen but not only, are all "potential" experts in different domains, be those limited, but this knowledge/expertise is seldom shared.

So this invention aims to provide to users/customers in large retail stores, on one hand, a way to get at their fingertips and when needed, a piece of advise on a product(s) or a solution for a problem, and, on the other hand, a way to share one's knowledge and further get rewarded for it.

The invention would allow any customer facing questions about a product to easily ask, from a mobile terminal, for some help or pieces of advise, requiring these pieces of advice not only from experts (or pseudo-experts) that are the salesmen from the retail shop but also from the multitude of other customers that may be able to provide some information due to their expertise in that domain, a previous similar experience or a previous purchase of the product.

The invention allows as well to reward by means of reductions, voucher, coupons, etc. customers who have brought their help to another customer.

The invention relies on mobile terminals (PDA, cell phone, etc.), proper to the customer or specific to the store, that are used to:
- scan the product(s) requiring some help and send a help notification
- receive and respond to an incoming notification

Communication between the mobile terminals and the central server is done using WIFI, Bluetooth, or any other short distance communication channel.

The terminal obtains the ID of the product or category of products requiring some help preferably through RFID tags or flash codes.

A GUI (Graphical User Interface) available on the mobile terminal allows to:
- configure the privacy options (availability for providing help, domains of competency/expertise)
- display the detail of the product(s)
- choose basic notifications about the type of help to send (ex: opinion about a product, advice of product for a specific need)
- view and respond to an incoming notification
Other objects and further features of the present invention will be apparent from the following detailed description when read in conjunction with the accompanying drawings :

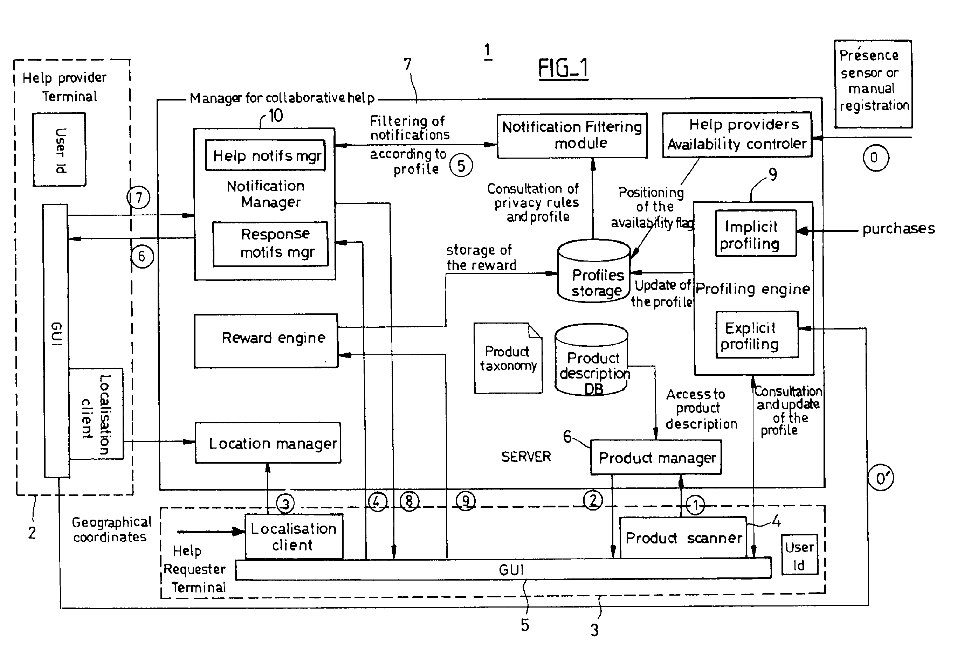

Fig. 1 illustrates an embodiment of an assistance system according to the invention.

A description will be hereinafter given of embodiments of the present invention, by referring to the drawing.

Figure 1 depicts an assistance system according to an embodiment of the invention. The following steps represents an embodiment of an assistance method according to the invention.

### Stage 1 : Setting profiling and privacy configuration:

1. The first time a customer uses the system 1, a software installs itself on his mobile terminal 2
2. The customer can initiate his profile by selecting categories of products for which he's able to bring advises. He will only receive notifications concerning those domains of "expertise" (step 0')
3. The customer indicates whether or not he is available, during his presence in the store, for receiving notifications (step 0)

### Stage 2. Sending a notification for help:

1. With his terminal 3, by the means of flash code, RFID tags 4 or manually entering the product reference, the customer selects the product for which he needs some help. (step 1)
2. Thanks to a product manager 6 in a collaborative assistance management module 7, the Graphical User Interface 5 proposes him to choose that particular product or one of the parent category (to broaden the request), each proposition showing the number of customers potentially able to respond. (step 2)
3. Optionally, the customer also selects the degree of expertise needed who among the salesmen or the other customers will be transmitted the notification
4. Once the choice made, the help requester terminal 3 is geo-localized in the store (step 3) and the notification is sent (step 4). The customer waits for responses.
5. Targeting of help providers is done according to their profile and the type of request. (step 5)

### Stage 3. Responding to a notification:

1. A customer and/or a salesman receives a notification message asking for help. (step 6)
2. The customer and/or a salesman accepts with different types of message: ex: "coming right now", "arriving in 5 min" (step 7). Response is sent back to requester. (step 8)
3. Once the help provider meets the help requester and shares with him his opinions, the latter validates the assistance brought which induces a reward for the customer who brought his help. (step 9)
4. The help requester can also rate the advice given, which will increase the reliability of the help provider

### Concerning the Collaborative assistance management module or collaborative help manager:

**The Collaborative help manager** is in charge of (I) detecting a community of help providers, (II) providing a means to choose and send a help notification, (III) informing help providers and get a response from them, (IV) helping the contact between help requester and help provider, (V) calculating a reward for the help provider.

More precisely, it relies on the following seven blocks on the server side:
- The Helper providers Availability Controller 8 is in charge of controlling the presence and the availability of helper providers (who have previously registered the system) inside the store in order to build dynamically the database of helpers, customers or salesmen available to answer for advises/help coming from other customers.

The helper providers could be detected automatically when their terminal is identified inside the cell of the store or when they decide to manually register using a GUI on their terminal or through a RFID sensor.

A helper that has been detected as available by the system is subject to be targeted by a notification if his profile corresponds to the kind of help required.
- The Profiling Engine block 9 is composed of the Implicit Profiling Manager and the Explicit Profiling Manager both managing a single profile for each customer.

The profile of a customer based on a product taxonomy is basically composed of products and categories of products that constitute a minima an area of expertise or knowledge for the customer. This profile will be used to determine the eligibility of a customer to receive a notification.
■ Explicit Profiling Manager is used to store or update the profile of a customer. The customer can modify this profile via a GUI an his mobile terminal.
■ Implicit Profiling Manager is used to store or update the profile of a customer from his purchases. This module could get input data from the central cash of the store or from the terminal of the customer when paying with it.

The Notification Manager block 10 is composed of the Help Notification Manager and the Response Notification Manager
■ Help Notification Manager is used to manage the lifecycle of a help notification that has been issued. It can be cancelled or closed (by the customer who has send it), acknowledged (by other customers willing to help)
■ Response Notification Manager is used to manage the lifecycle of a help notification that has been received. It can be ignored or accepted in which case a response notification is sent back to the terminal who issued the notification.

The notification Manager relies on the Notification Filtering module to filter the recipients who will receive the notification. Two solutions are possible: The notification can be broadcasted to all help providers and then filtered at the reception or sent individually (peer-to-peer) to help providers which profile match the profile of the request.

The Product Manager: allows the customer to get the description of a product as well as its hierarchy (according to the taxonomy). The hierarchy of a product is used by the GUI when issuing a call for advise/help, it allows to broaden the request to the category of the product instead of a particular product.

The Location Manager: manages the location coordinates of the mobile terminals inside the store. This enables the customer receiving a notification to know where the customer requiring the help is situated. The Location Manager provides information about the closeness between the customer who has issued the help notification (help requester) and the help provider, which is essential to validate the reward.

The Reward engine: calculates the reward given to the customer(s) who have helped. The Reward Engine receives the validation of the help from the help requester. A rating on the value of the help provided can also be given by that person. It will be taken into account in the reward calculation process.

The collaborative help manager relies on the following four blocks on the terminal side:
Id client (for identity client): it is an identifier inside the terminal. This may be for example a RFID chip.

The localization client: gets geographical coordinates inside the store from a localization system, known as such, that may be based on triangulation. The localization client sends id client and coordinates to the Localization Manager.

The product scanner : allows to read the flash code, bar code or RFID tag of a product. Product Id can also be given manually via the GUI.

GUI (for Graphical User Interface): allows both help providers and help requesters to use the system:
- set the help provider's status (help provider terminal)
- set the help provider's profile (help provider terminal)
- get a description of the product as well as the taxonomy of that product (help requester terminal)
- select the type of notification to send (help requester terminal)
- validate the sending of a notification to help providers (help requester terminal)
- select a response to a request (help provider terminal)
- display the response of help providers (help requester terminal)
- view the geographical position inside the store of the help requester (help provider terminal)
- acknowledge the help provided for each help provider for reward purposes (help requester terminal).

The above-described invention allows to improve the service offered to customers in large retail stores. This benefits not only to the customer whose satisfaction is improved but also to the store. Indeed, a satisfied customer will be more prone to come back to the store for future purchases. As well, the reward system encourages customers to come back to the store.

Here are several advantages this invention offers over the existing prior art:
- always available : permanent help offered to customers for any product, any time
- time saving: no extensive search on the internet, just click and wait
- intelligent system
- new resources for getting informed, advised in a large commercial center

## Claims

1. Assistance system for assisting a user in a retail store, comprising a user terminal adapted to send an assistance request related to a specific product to an assistance message management module, wherein the system comprises a collaborative assistance management module comprising
- detection means for detecting a community of assistance providers for the specific product,
- selection means for selecting at least an assistance provider among the community according to a criterion related to the user or to the product,
- and the assistance message management module being adapted to connect the selected at least the assistance provider to the user.

2. Assistance method for assisting a user in a retail store, comprising:
- providing a user terminal adapted to send an assistance request related to a specific product to an assistance message management module,
- providing a collaborative assistance management module,
- detection step for detecting a community of assistance providers for the specific product,
- selection step for selecting at least an assistance provider among the community according to a criterion related to the user or to the product,
- and connection step for connecting the selected at least the assistance provider to the user.
